# EUROPEAN PATENT APPLICATION

(11) **EP 3 106 701 A1**
(43) Date of publication of application: **21.12.2016**
(21) Application number: 15748474.2
(22) Date of filing: 03.02.2015
(51) Int. Cl.: F16D 65/12

(54) **RAILROAD WHEEL WITH BRAKE DISC**

(30) Priority: 14.02.2014 JP 2014026900
(71) Applicant: Nippon Steel & Sumitomo Metal Corporation, Tokyo 100-8071 (JP)
(72) Inventor: SAKAYAMA, Yuiko, Tokyo 100-8071 (JP); NOGAMI, Hiroshi, Tokyo 100-8071 (JP); FUJIMOTO, Takahiro, Tokyo 100-8071 (JP); SAKAGUCHI, Atsushi, Tokyo 100-8071 (JP); ASABE, Kazutaka, Tokyo 100-8071 (JP)
(74) Representative: Zimmermann & Partner Patentanwälte mbB
(86) International application number: PCT/JP2015/000454
(87) International publication number: WO 2015/122146

(57) **Abstract**

A railway wheel includes: a wheel (10) including a plate portion (13); and a brake disc (1) including a circular plate portion (2) whose front face (2a) side is a sliding surface, and a plurality of fin portions (3) which are radially projected on a back face (2b) of the circular plate portion (2), wherein two of the brake discs (1) interpose the plate portion (13) of the wheel (10) with each of sliding surfaces thereof facing outwardly, and are fastened in a region within the sliding surface. Regarding an area of a section crossing a space formed between the brake disc (1) and the wheel (10) along a circumferential direction, a minimum section portion in which the sectional area is minimum is present closest to the back face (2b) within the outer peripheral surface (2c) of the circular plate portion (2) within a region formed by an outer peripheral surface (2c) of the circular plate portion (2) and an inner peripheral surface (12b) of the rim portion (12), and an area of the minimum section portion is not less than 2500 mm² and not more than 7000 mm². The brake disc (1) can suppress aerodynamic sound during high speed travelling, and has a simple shape and excellent productivity.

## Description

### TECHNICAL FIELD

The present invention relates to a railway wheel with brake disc (hereafter, also referred to simply as a "railway wheel with BD"), in which brake discs are fastened to a wheel for a railway vehicle.

### BACKGROUND ART

As a braking system for railway vehicles, disc brakes which have excellent braking performance become more frequently used as the speed of vehicle and the size thereof increase. A disc brake is configured such that a brake lining is pressed against a sliding surface of a brake disc attached to a wheel. As a result, braking force is generated in a rotating wheel, thereby controlling the speed of vehicle.

The type of disc brake includes a center-fastening type (sliding-surface fastening type) brake disc in which brake discs are fastened to a wheel in a region within a sliding surface, and an inner-circumference fastening type brake disc in which brake discs are fastened to a wheel in a region located closer to the inner circumference than the sliding surface is. The inner-circumference fastening type brake disc requires a portion to be used for fastening, aside from a portion including a sliding surface. On the other hand, the center-fastening type brake disc does not need to be provided with such a portion to be used for fastening, and therefore is advantageous in weight reduction.

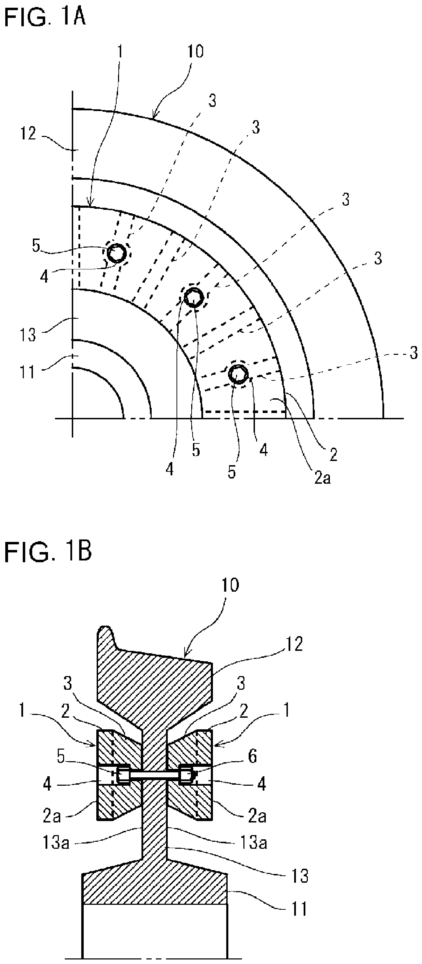

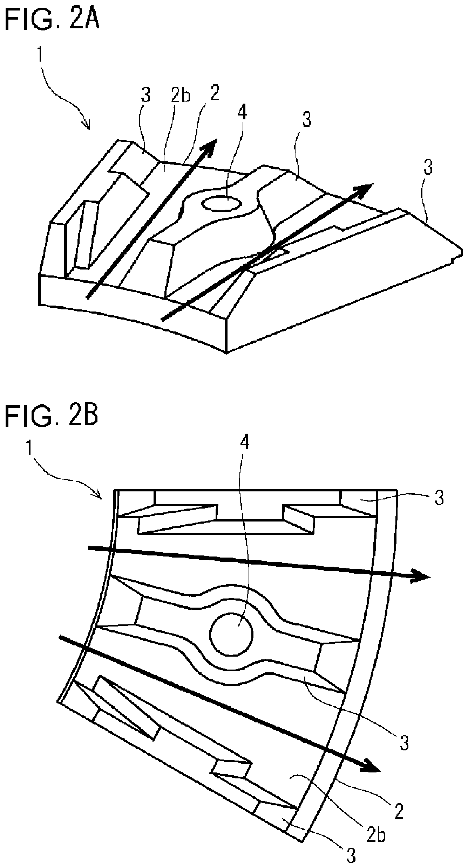

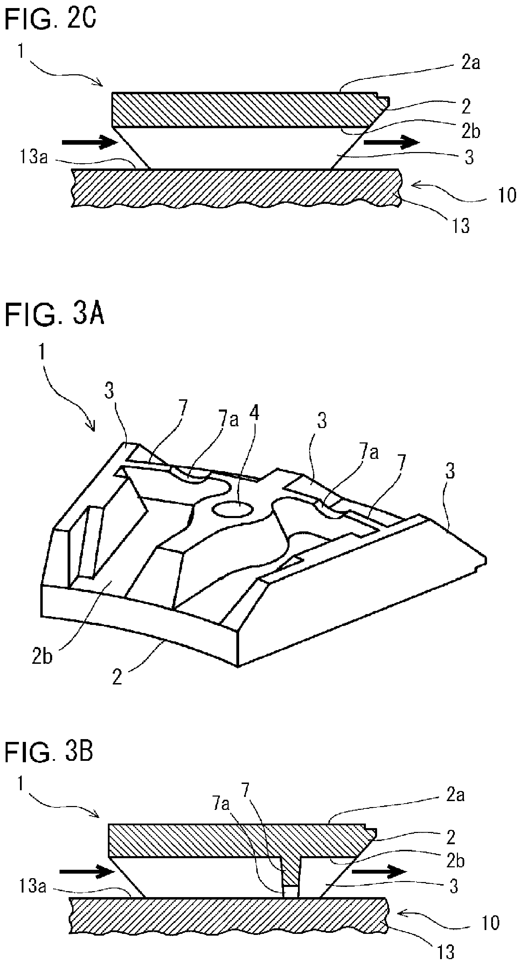

FIGS. 1A and 1B are diagrams to show an overall structure of a railway wheel with brake disc constituting a disc brake for a railway vehicle, in which FIG. 1A shows a plan view of a quarter circle portion, and FIG. 1B shows a sectional view along the radial direction of a half circle portion, respectively. FIGS. 2A to 2C are diagrams to topically show the structure of a conventional railway wheel with BD, in which FIG. 2A shows a perspective view of a back face of a brake disc seen from the inner peripheral surface side, FIG. 2B shows a plan view of a brake disc seen from a back face side, and FIG. 2C shows a sectional view along the radial direction, respectively. All of the brake discs shown in FIGS. 1A, 1B, and 2A to 2C are of center-fastening type.

As shown in FIGS. 1A, 1B, and 2A to 2C, a brake disc 1 includes an annular circular plate portion 2 whose front face 2a provides the sliding surface. In the back face 2b of the circular plate portion 2, a plurality of fin portions 3 are projected in a radial manner. In some of the plurality of fin portions 3, a bolt hole 4 passing through to the circular plate portion 2 is formed at an approximately central position in the radial direction.

A wheel 10 includes a boss portion 11 into which an axle shaft is to be press fit, a rim portion 12 including a tread which is to be in contact with a rail, and a plate portion 13 for combining them together. The brake discs 1 are disposed in a set of two so as to interpose the plate portion 13 of the wheel 10 therebetween with the front face 2a of each brake disc facing outwardly. A bolt 5 is inserted into each bolt hole 4, and a nut 6 is screwed onto each bolt 5 and fastened thereto. As a result, a front end surface of the fin portion 3 is brought into pressure contact with a side face 13a of the plate portion 13 of the wheel 10 over the entire range of the radial direction or a partial region thereof, and the brake disc 1 is fastened to the wheel 10 in this state.

The brake disc 1 is fastened to the plate portion 13 in a region within the sliding surface. In the center-fastening type brake disc, regarding the radial direction of the brake disc 1, it is preferable that the brake disc 1 is fastened to the wheel 10 in the vicinity of a central portion between the inner circumference and the outer circumference of the brake disc 1, for example, a portion between a position to internally divide the inner circumference and the outer circumference into a ratio of 1 : 3, and a position to internally divide the inner circumference and the outer circumference into a ratio of 3 : 1.

Substantially the entire surface of the front face of the brake disc 1 serves as a sliding surface, and as shown in FIG. 1B, a large gap (for example, a gap of 70 to 120 mm) is formed over the entire circumference between the boss portion 11 and the circular plate portion 2. That is, the brake disc 1 does not extend to the vicinity of the boss portion 11, thus realizing weight reduction of the brake disc 1. A conventional railway wheel with BD having such a configuration is disclosed in, for example, Patent Literature 1.

While a railway vehicle is travelling, the brake disc 1 rotates integrally with the wheel 10 at a high speed. Accordingly, air around the brake disc 1 flows from the inner circumference side (a gap between the boss portion 11 and the circular plate portion 2) into a space formed between the brake disc 1 and the wheel 10, specifically, a space surrounded by the circular plate portion 2 and the fin portion 3 of the brake disc 1, and the plate portion 13 of the wheel 10, and flows out from the outer circumference side (see solid arrows in FIGS. 2A to 2C). That is, while the railway vehicle is travelling, a gas flow of air occurs in a space between the brake disc 1 and the wheel 10. Such a gas flow becomes significant when the vehicle travels at a high speed of more than 300 km/h, like a high-speed railway vehicle such as the Shinkansen (R), thereby inducing noise of wind noise. This wind noise is referred to as "aerodynamic sound". Reduction of aerodynamic sound is required from consideration of the environment.

In an inner-circumference fastening type brake disc, the gap between the boss portion 11 and the circular plate portion 2 is very small compared with a center-fastening type brake disc. For that reason, while the vehicle is travelling, the amount of air that flows into the space surrounded by the circular plate portion 2 and the fin portion 3 of the brake disc 1, and the plate portion 13 of the wheel 10 is small, and generally aerodynamic sound at a level that causes a problem will not be generated. Therefore, it can be said that the generation of aerodynamic sound is a problem peculiar to the center-fastening type brake disc.

Prior arts that address the need to reduce aerodynamic sound associated with a center-fastening type brake disc include the followings.

For example, Patent Literature 2 discloses a railway wheel with BD, in which a brake disc is additionally provided with a rib between adjacent fin portions along the circumferential direction so that the gas flow is suppressed by the rib. According to the railway wheel with BD disclosed in the above described literature, it is possible to reduce the aerodynamic sound to a desired level.

However, in the technique disclosed in Patent Literature 2, cooling performance for the brake disc during braking deteriorates as the gas flow is suppressed by the rib. For this reason, increases in the deformation caused by thermal expansion of the brake disc, and in the stress load inflicted upon the fastening bolt thereby, coupled with increase in the stiffness of the brake disc itself due to the addition of the ribs may cause a risk that durability of the brake disc and the bolt deteriorates.

A prior art to solve this problem is disclosed in Patent Literature 3.

FIGS. 3A and 3B are diagrams to topically show the structure of a conventional railway wheel with BD disclosed in Patent Literature 3, in which FIG. 3A shows a perspective view of a back face of a brake disc seen from its inner peripheral surface side, and FIG. 3B shows a sectional view along the radial direction. As shown in these figures, in the railway wheel with BD disclosed in Patent Literature 3, the brake disc 1 is added with ribs 7 in the circumferential direction each between adjacent fin portions 3, and further a slit 7a is formed along the radial direction in a central portion in the circumferential direction of each rib 7.

According to this railway wheel with BD, a gas flow is ensured by the slit 7a. Since this allows to maintain the cooling performance for the brake disc 1 during braking, and to lighten the increase in stiffness due to addition of the rib, deformation accompanying thermal expansion of the brake disc 1 and stress load inflicted on the fastening bolt are mitigated, thereby suppressing the deterioration in the durability of the brake disc 1 and the bolt.

### CITATION LIST

### PATENT LITERATURE

Patent Literature 1: Japanese Patent Application Publication No. 2006-9862
Patent Literature 2: Japanese Patent Application Publication No. 2007-205428
Patent Literature 3: International Application Publication No. WO2010/071169

### SUMMARY OF INVENTION

### TECHNICAL PROBLEM

As described so far, a conventional railway wheel with BD for reducing aerodynamic sound is configured such that a rib is added in the circular plate portion of the disc brake, and further a slit is formed on the rib with the aim of suppressing the gas flow in a space surrounded by the circular plate portion and the fin portion of the brake disc, and the plate portion of the wheel. As a result of that, the shape of the brake disc becomes complicated, thus inevitably leading to deterioration in productivity of the brake disc.

Specifically, since additional work (machining, etc.) to adjust the heights of not only the fin portion but also the rib becomes necessary, and further additional work to form a slit in the rib becomes necessary, the production process of the brake disc becomes complicated. Particularly, when the brake disc is produced by forging, the load on the die increases, shortening of die life will be undeniable.

The present invention has been made in view of the above described problems, and has its objective to provide a railway wheel with brake disc having the following characteristics:

The aerodynamic sound during high speed traveling is suppressed, and besides, the brake disc has a simple shape and an excellent productivity.

### SOLUTION TO PROBLEM

The railway wheel with brake disc which is an embodiment of the present invention is a railway wheel with brake disc including:
a wheel for a railway vehicle, including a boss portion, a rim portion, and a plate portion for combining them together; and
a brake disc, including an annular circular plate portion whose front face provides a sliding surface, and a plurality of fin portions which are radially projected on a back face of the circular plate portion, wherein
two of the brake discs interpose the plate portion of the wheel with each of sliding surfaces thereof facing outwardly, and are fastened in a region within the sliding surface, and wherein
regarding an area of a section crossing a space formed between the brake disc and the wheel along a circumferential direction, a minimum section portion in which the sectional area is minimum is present closest to the back face within an outer peripheral surface of the circular plate portion within a region formed by the outer peripheral surface of the circular plate portion and an inner peripheral surface of the rim portion, and
an area of the minimum section portion is not less than 2500 mm² and not more than 7000 mm².

The area of the minimum section portion is preferably not less than 3000 mm².

The above described railway wheel with brake disc can be configured such that the circular plate portion has a constant outer diameter.

### ADVANTAGEOUS EFFECTS OF INVENTION

The railway wheel with brake disc of the present invention has the following remarkable effects:

The aerodynamic sound during high speed traveling is suppressed, and besides, the brake disc has a simple shape and an excellent productivity.

### BRIEF DESCRIPTION OF DRAWINGS

[FIG. 1A] FIG. 1A is a diagram to show an overall structure of a railway wheel with brake disc, showing a plan view of a 1/4 circular portion.
[FIG. 1B] FIG. 1B is a diagram to show an overall structure of a railway wheel with brake disc, showing a sectional view along the radial direction of a semi-circular portion.
[FIG. 2A] FIG. 2A is a diagram to topically show a structure of a conventional railway wheel with brake disc, showing a perspective view of the back face of the brake disc seen from the inner peripheral surface side.
[FIG. 2B] FIG. 2B is a diagram to topically show a structure of a conventional railway wheel with brake disc, showing a plan view of the brake disc seen from the back face side.
[FIG. 2C] FIG. 2C is a diagram to topically show a structure of a conventional railway wheel with brake disc, showing a sectional view along the radial direction.
[FIG. 3A] FIG. 3A is a diagram to topically show a structure of a conventional railway wheel with brake disc disclosed in Patent Literature 3, showing a perspective view of the back face of the brake disc seen from the inner peripheral surface side.
[FIG. 3B] FIG. 3B is a diagram to topically show a structure of a conventional railway wheel with brake disc disclosed in Patent Literature 3, showing a sectional view along the radial direction.
[FIG. 4] FIG. 4 is a diagram to show a correlation between the sum total of opening areas, and the aerodynamic sound level and the ventilation amount in a railway wheel with brake disc.
[FIG. 5A] FIG. 5A is a sectional view along the radial direction to show a structure of a railway wheel with brake disc, which is an embodiment of the present invention.
[FIG. 5B] FIG. 5B is a sectional view to topically show the railway wheel with brake disc of FIG. 5A, showing the rectangular region in FIG. 5A.
[FIG. 6A] FIG. 6A is a sectional view along the radial direction to show a structure of a railway wheel with brake disc, which is used as a comparative embodiment in an analysis.
[FIG. 6B] FIG. 6B is a sectional view to topically show the railway wheel with brake disc of FIG. 6A, showing the rectangular region in FIG. 6A.
[FIG. 7] FIG. 7 is a diagram to show a correlation between the area of the spatial cross section in the minimum section portion, and the aerodynamic sound level and the ventilation amount in a railway wheel with brake disc.
[FIG. 8] FIG. 8 is a diagram to show a relationship between the center frequencies and the noise levels after 1/3 octave band processing, which is disclosed in Patent Literature 3.

### DESCRIPTION OF EMBODIMENTS

As described in Patent Literature 3, there is a strong correlation between the ventilation amount of the air, which flows through a space formed between the brake disc and the wheel, particularly, a space surrounded by the circular plate portion and the fin portion of the brake disc and the plate portion of the wheel, and the level of aerodynamic sound.

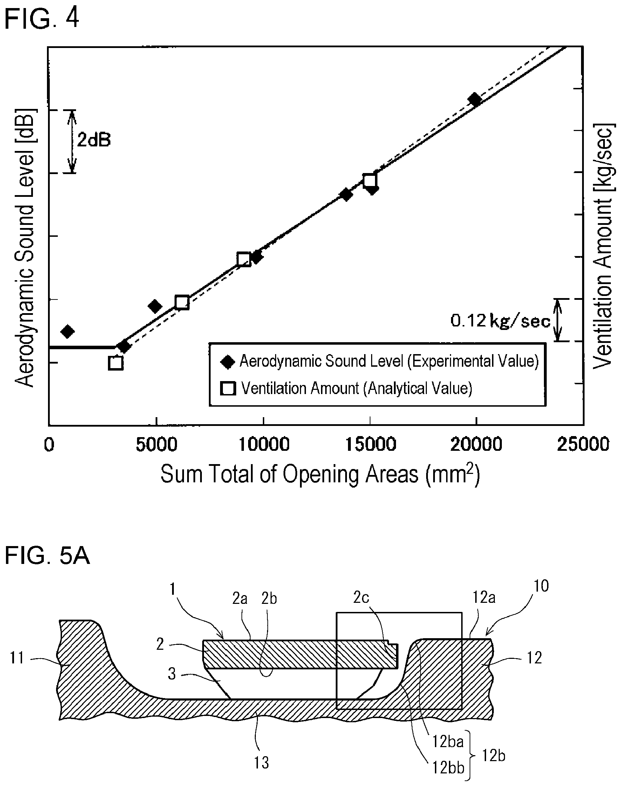

FIG. 4 is a diagram to show a correlation between the sum total of opening areas, and the aerodynamic sound level and the ventilation amount in the railway wheel with brake disc. The sum total of opening areas mentioned herein refers to a sum total of opening areas over the entire range of the circumferential direction when seen from the inner circumferential side of the brake disc regarding a space surrounded by the circular plate portion and the fin portion of the brake disc, and the plate portion of the wheel. In other words, the sum total of opening areas refers to an area of a minimum section portion in which area of the spatial cross section is minimum regarding a section (hereafter, referred to as a "spatial cross section") that crosses along the circumferential direction the space formed between the brake disc and the wheel. For example, like a railway wheel with BD shown in FIGS. 3A and 3B, in a case in which a rib is added between fin portions of the brake disc, and a slit is formed in the rib, since the minimum section portion is located at the position of the rib, the area of the spatial cross section at the position of the rib corresponds to the sum total of opening areas shown in FIG. 4. Note that the ventilation amount has been obtained by a thermal fluid analysis (per one brake disc), and the level of aerodynamic sound has been obtained by experiment.

It is seen that, as shown in FIG. 4, the aerodynamic sound level increases as the area (sum total of opening areas) of the minimum section portion increases, and the ventilation amount exhibits a similar tendency. That is, there is a strong correlation between the ventilation amount and the aerodynamic sound level. For this reason, evaluation of the aerodynamic sound level can be performed with the ventilation amount as an index, and suppression of ventilation amount leads to suppression of aerodynamic sound. And, to suppress the ventilation amount, it only needs to appropriately specify the area of the minimum section portion of the spatial cross section.

In this respect, in the conventional railway wheel with BD described in Patent Literatures 2 and 3, which pays attention to a space surrounded by a circular plate portion and fin portions of the brake disc, and a plate portion of the wheel, to limit the gas flow by disposing the minimum section portion of the spatial cross section in that space, a rib is added in the circular plate portion of the disc brake, and further a slit is formed in the rib. As a result, the above described problem becomes apparent.

Accordingly, to solve the above described problem, the present inventors have paid attention only to an outer circumferential region of a circular plate portion of the brake disc, that is, a limited region formed by the outer peripheral surface of the circular plate portion of the brake disc and the inner peripheral surface of the rim portion of the wheel, instead of the space of interest in prior art, which is surrounded by the circular plate portion and the fin portions of the brake disc, and the plate portion of the wheel within the space formed between the brake disc and the wheel. Then, the present inventors have investigated the ventilation amount by using a numerical calculation by thermal fluid analysis and disposing the minimum section portion of the spatial cross section to be closest to the back face (hereafter, referred to as a "back face portion of the outer peripheral surface of the circular plate portion") of the outer peripheral surface of the circular plate portion within the limited region. As a result, the present inventors have obtained a finding that appropriately specifying the area of the spatial cross section within the back face portion of the outer peripheral surface of the circular plate portion of the brake disc which is supposed to be the minimum section portion can suppress the ventilation amount to be equivalent to that of prior art, thereby suppressing the aerodynamic sound, and have completed the present invention.

Hereafter, embodiments of the railway wheel with brake disc of the present invention will be described in detail.

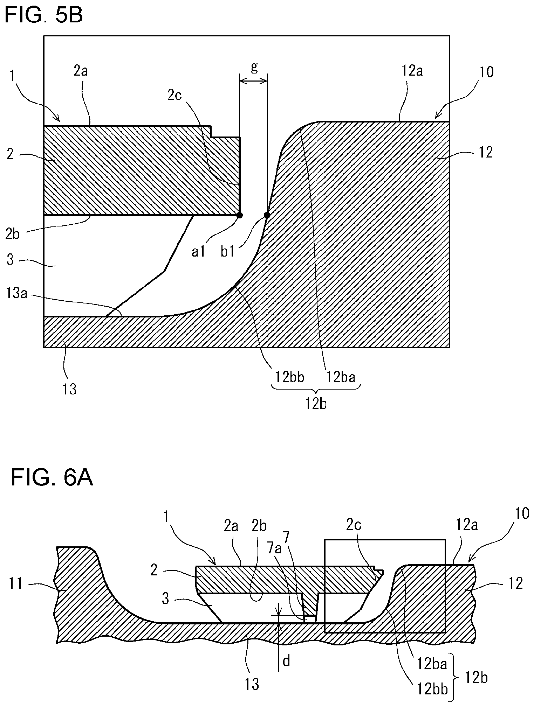

FIG. 5A is a sectional view along the radial direction to show a structure of a railway wheel with brake disc, which is an embodiment of the present invention. FIG. 5B is a sectional view to topically show the railway wheel with brake disc of FIG. 5A, showing the rectangular region in FIG. 5A. Hereafter, parts common to those of the conventional railway wheel with BD shown in FIGS. 1A, 1B, and 2A to 2C are given the like symbols, thereby appropriately omitting overlapping description.

As shown in FIGS. 5A and 5B, a brake disc 1 in the present embodiment includes a circular plate portion 2 and a fin portion 3. This brake disc 1 does not include the rib 7 as shown in FIGS. 3A and 3B. That is, only a plurality of fin portions 3 are projected in a radial manner on a back face 2b of the circular plate portion 2.

The material of the brake disc 1 can adopt cast iron, cast steel, forged steel, aluminum, carbon, and the like.

Note that strictly speaking, a region in a front face 2a of the brake disc 1, which provides a sliding surface, is raised one step higher. The brake disc 1 is to be replaced when the sliding surface has been worn due to repetitive braking and the wear of the sliding surface has progressed to a height of the front face 2a of the circular plate portion 2.

A wheel 10 includes a boss portion 11, a rim portion 12, and a plate portion 13. The inner peripheral surface 12b of the rim portion 12 includes a corner surface 12ba which connects to the side face 12a of the rim portion 12, and a fillet surface 12bb which connects to the corner surface 12ba and the side face 13a of the plate portion 13.

The shapes of the corner surface 12ba and the fillet surface 12bb are designed according to the specification of the vehicle. For example, the corner surface 12ba is a single round face whose contour shape in a section along the axial direction of the wheel 10 is an arc shape, and whose radius of curvature is constant. The fillet surface 12bb is a complex plane in which a tapered surface of a frusto-conical shape and a round face having a constant radius of curvature are combined, and whose contour shape in a section along the axial direction of the wheel 10 is a combined shape of a straight line and an arc. But, the fillet surface 12bb may be a single round face, or a free curved surface whose radius of curvature varies.

Here, in the railway wheel with BD of the present embodiment, regarding a spatial cross section which crosses along the circumferential direction the space formed between the brake disc 1 and the wheel 10, a minimum section portion in which the area of the spatial cross section is minimum, is present in a region formed by the outer peripheral surface 2c of the circular plate portion 2 of the brake disc 1 and the inner peripheral surface 12b of the rim portion 12 of the wheel 10. Specifically, the minimum section portion is present closest to the back face 2b within the outer peripheral surface 2c of the circular plate portion 2 (see the back face portion of the outer peripheral surface of the circular plate portion, which is given a symbol "a1" in FIG. 5B).

To realize such a condition, the back face portion a1 of the outer peripheral surface 2c of the circular plate portion of the brake disc 1 is in closest proximity to the inner peripheral surface 12b of the rim portion 12 of the wheel 10. For example, in the case of a brake disc 1 whose circular plate portion 2 has an outer diameter of 715 mm, a minimum gap g between the back face portion a1 of the outer peripheral surface 2c of the circular plate portion and the inner peripheral surface 12b of the rim portion 12 is about 1.3 to 3.1 mm. The minimum gap g corresponds to an interval between a portion b1 at which an extension line of the back face 2b of the circular plate portion 2 intersects the inner peripheral surface 12b of the rim portion 12, and the back face portion a1 of the outer peripheral surface 2c of the circular plate portion. The outer diameter of the circular plate portion 2 is preferably constant. That is because machining thereof will be easily performed.

Particularly, in the railway wheel with BD of the present embodiment, the area of the spatial cross section in the back face portion 1 of the outer peripheral surface 2c of the circular plate portion is not less than 2500 mm² and not more than 7000 mm². The area of the section is preferably not less than 3000 mm². Such numerical range is drawn out from consideration based on a thermal fluid analysis and analysis results thereof to be described below.

### [Thermal fluid analysis]

For the railway wheel with BD shown in FIGS. 5A and 5B, a thermal fluid analysis is performed simulating a time of high speed traveling in which the traveling speed is constant at 360 km/h, to evaluate a ventilation amount in the minimum section portion of the spatial cross section. In that occasion, a model is used in which the area of the spatial cross section in the back face portion a1 (minimum section portion) is variously changed by variously changing the minimum gap g between the back face portion a1 of the outer peripheral surface 2c of the circular plate portion and the inner peripheral surface 12b of the rim portion 12.

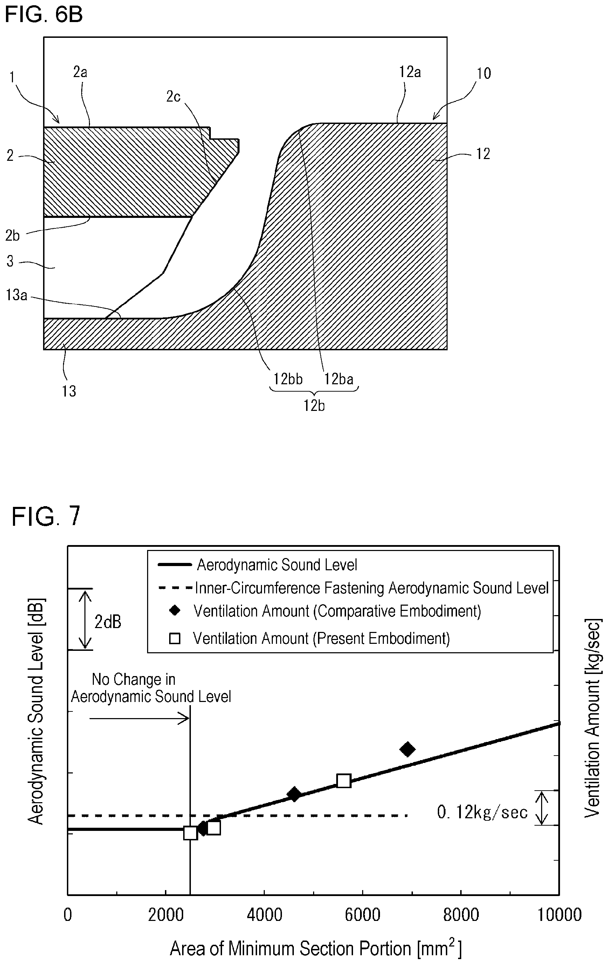

Moreover, for comparison purposes, as shown in FIGS. 6A and 6B, a model of the railway wheel with BD in which a rib 7 with a slit 7a is added between fin portions 3, and a model of the railway wheel with BD in which a rib 7 with a slit 7a is not provided are used. The railway wheel with BD shown in FIGS. 6A and 6B, which is the same as the railway wheel with BD disclosed in Patent Literature 3, that is, the conventional railway wheel with BD shown in FIGS. 3A and 3B, has a large minimum gap g between the back face portion a1 of the outer peripheral surface 2c of the circular plate portion and the inner peripheral surface 12b of the rim portion 12. In one model, in which a rib 7 with a slit 7a is provided, of those of comparative embodiment, the position of the fin portion 7 is the minimum section portion of the spatial cross section, and the area of the spatial cross section at the minimum section portion is variously changed by variously changing the depth d of the slit 7a. In either of the present embodiment and the comparative embodiment, the brake disc is center fastened.

Table 1 below shows conditions of the model of the railway wheel with BD used for analysis. The minimum section portion is present, in the present embodiment, in a region formed by the outer peripheral surface 2c of the circular plate portion 2 and the inner peripheral surface 12b of the rim portion 12 throughout the entire space formed between the brake disc 1 and the wheel 10; and is present, in the comparative embodiment, between the outer circumferential portion of the back face 2b of the circular plate portion 2 and the plate portion 13 (in the slit portion in the case in which a rib is provided). It is noted that because of that a fin portion 3 is present between the circular plate portion 2 and the plate portion 13, and the like, the minimum section portion is not uniquely determined only from one section of the railway wheel with BD.

[Table 1]

**TABLE 1**

| Category | Minimum gap g between back face portion and inner peripheral surface of rim portion [mm] | Slit depth d [mm] | Area of minimum section portion [mm²] | | |
|---|---|---|---|---|---|
| | | | Slit portion | Between plate portion and circular plate portion | Between rim portion and circular plate portion |
| Present embodiment | 1.10 | - | - | 21600 | 2506 * |
| | 1.30 | - | - | 21600 | 2962 * |
| | 2.46 | - | - | 21600 | 5614 * |
| Comparative embodiment | 9.00 | 5 | 2760 * | 21600 | 26280 |
| | 9.00 | 8 | 4608 * | 21600 | 26280 |
| | 9.00 | 12 | 6912 * | 21600 | 26280 |
| | 9.00 | - | - | 21600 * | 26280 |

| | | | | | |
|---|---|---|---|---|---|
| Remarks) Symbol "-" indicates that there is neither rib nor slit. Symbol "*" indicates area of minimum section portion throughout between wheel and brake disc. | | | | | |

Other typical conditions of analysis model are as follows.

### <Brake disc>

- Forged steel disc for Shinkansen (R),
- Inner diameter of circular plate portion: 417 mm,
- Length from the sliding surface of the circular plate portion to the front end surface (contact surface with the wheel plate portion) of the fin portion: 45 mm, and
- 12 bolt holes whose centers are located on an identical circle of a diameter of 560 mm are formed at an equal interval, and a bolt is inserted through each bolt hole to fasten the brake disc and the wheel.

### <Wheel>

- Rolled wheel for Shinkansen (R),
- Inner diameter: 196 mm, Outer diameter: 860 mm, and thickness in radial direction of rim portion: 60 mm.

### [Analysis results and discussion]

FIG. 7 is a diagram to show a correlation between the area of the spatial cross section in the minimum section portion, and the aerodynamic sound level and the ventilation amount in a railway wheel with brake disc. It is noted that the aerodynamic sound level shown in the figure is the same as that shown in FIG. 4. FIG. 7 shows with a broken line the aerodynamic sound level of a railway wheel with BD which includes an inner-circumference fastening type brake disc.

As shown in FIG. 7, there is coincidence in the relationship between the area of the spatial cross section in the minimum section portion and the ventilation amount coincides, between the railway wheel with BD of the present embodiment and the conventional railway wheel with BD of the comparative embodiment. From this, it can be said that regarding the relationship of the aerodynamic sound level as well, there is coincidence between the railway wheel with BD of the present embodiment and the conventional railway wheel with BD of the comparative embodiment.

The aerodynamic sound level decreases as the area of the minimum section portion decreases as shown in FIG. 7. For this reason, to decrease the aerodynamic sound level, the area of the minimum section portion may be decreased, thereby decreasing the ventilation amount. However, even when the area of the minimum section portion is decreased to be less than 2500 mm², the aerodynamic sound level will not change. Moreover, when the area of the minimum section portion is excessively decreased, the ventilation amount is decreased, and thereby a problem occurs in that the cooling performance of the brake disc deteriorates. From these reasons, the lower limit of the minimum section portion is set to 2500 mm². And the lower limit is preferably 3000 mm², and more preferably 3500 mm².

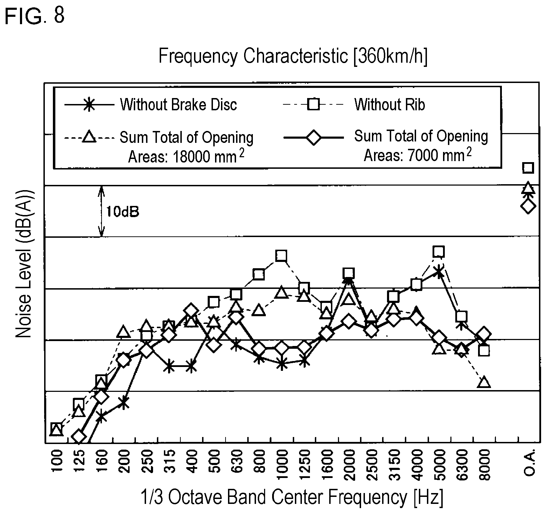

FIG. 8 is a diagram to show a relationship between center frequencies and noise levels after 1/3 octave band processing, which is disclosed in Patent Literature 3. The noise level as used herein refers to the aerodynamic sound level. Moreover, the sum total of opening areas in the figure refers to the area of the minimum section portion in which the area of the spatial cross section is minimum.

The figure shown in FIG. 8 is obtained by an experiment supposing during a high speed traveling in which the traveling speed is constant at 360 km/h. In the experiment, a railway wheel without brake disc, a railway wheel with BD including a brake disc without a rib, and a railway wheel with BD which is added with a rib with a slit are used. The railway wheel with BD added with a rib with a slit is the same as the conventional railway wheel with BD shown in FIGS. 3A and 3B, that is, the railway wheel with BD of the comparative embodiment shown in FIGS. 6A and 6B. As the railway wheel with BD added with a rib with a slit, one in which the area of the spatial cross section at the minimum section portion which corresponds to the position of the rib is 18000 mm², and one in which the area of the same is 7000 mm² are adopted.

As shown in FIG. 8, in the case of the railway wheel with BD in which the area of the spatial cross section at the minimum section portion which corresponds to the position of the rib is 7000 mm², it is possible to remarkably decrease the aerodynamic sound in a frequency range with center frequencies of 800 to 1250 Hz, compared with the case of the railway wheel with BD in which the area is 18000 mm². On the other hand, from the result of the above described thermal fluid analysis, there is coincidence in the relationship between the area of the spatial cross section in the minimum section portion and the aerodynamic sound level, between in the railway wheel with BD of the present embodiment and in the conventional railway wheel with BD of the comparative embodiment. From these facts, in the railway wheel with BD of the present embodiment, the upper limit of the area of the minimum section portion is set to 7000 mm². The upper limit is preferably 6000 mm².

In a railway wheel with BD of the present embodiment having such a configuration, as shown in FIGS. 5A and 5B, the brake disc 1 includes no rib 7, only including a fin portion 3 on the back face of the circular plate portion 2, and therefore has a simple shape. For this reason, the production process of the brake disc 1 does not become complicated, and the productivity of the brake disc 1 is excellent. Even when a brake disc 1 is produced by forging, the load imposed on the die will not increase, and the die life will not be shortened.

Further, the railway wheel with BD of the present invention can suppress the aerodynamic sound to a level equivalent to that of prior art since it disposes the minimum section portion of the spatial cross section in the back face portion a1 of the outer peripheral surface 2c of the circular plate portion of the brake disc 1, thereby specifying the range of the area of the spatial cross section at the minimum section portion.

### INDUSTRIAL APPLICABILITY

The railway wheel with brake disc of the present invention can be effectively utilized for every railway vehicle equipped with a disc brake, and is particularly useful for high speed railway vehicles.

### REFERENCE SIGNS LIST

1: Brake disc, 2: Circular plate portion,
2a: Front face, 2b: Back face,
2c: Outer peripheral surface, 3: Fin portion,
4: Bolt hole, 5: Bolt, 6: Nut,
7: Rib, 7a: Slit, 10: Wheel,
11: Boss portion, 12: Rim portion,
12a: Side face, 12b: Inner peripheral surface,
12ba: Corner surface, 12bb: Filet surface,
13: Plate portion, 13a: Side face

## Claims

1. A railway wheel with brake disc comprising:
a wheel for a railway vehicle, comprising a boss portion, a rim portion, and a plate portion for combining them together; and
a brake disc comprising an annular circular plate portion whose front face provides a sliding surface, and a plurality of fin portions which are radially projected on a back face of the circular plate portion, wherein
two of the brake discs interpose the plate portion of the wheel with each of sliding surfaces thereof facing outwardly, and are fastened in a region within the sliding surface, and wherein
regarding an area of a section crossing a space formed between the brake disc and the wheel along a circumferential direction, a minimum section portion in which the sectional area is minimum is present closest to the back face within an outer peripheral surface of the circular plate portion within a region formed by the outer peripheral surface of the circular plate portion and an inner peripheral surface of the rim portion, and
an area of the minimum section portion is not less than 2500 mm² and not more than 7000 mm².

2. The railway wheel with brake disc according to claim 1, wherein
an outer diameter of the circular plate portion is constant.
